# EUROPEAN PATENT SPECIFICATION

(11) **EP 1 793 914 B1**
(45) Date of publication and mention of the grant of the patent: **17.02.2010**
(21) Application number: 05781574.8
(22) Date of filing: 30.08.2005
(51) Int. Cl.: B01D 53/94, B01J 35/00, F01N 3/28

(54) **CATALYST FOR PURIFYING EXHAUST GASES**
KATALYSATOR ZUR REINIGUNG VON ABGASEN
CATALYSEUR PERMETTANT DE PURIFIER DES GAZ D'ECHAPPEMENT

(30) Priority: 09.09.2004 JP 2004262301
(43) Date of publication of application: 13.06.2007
(73) Proprietor: TOYOTA JIDOSHA KABUSHIKI KAISHA, Toyota-shi, Aichi-ken, 471-8571 (JP)
(72) Inventor: Suzuki, Hiromasa, Toyota-shi, Aichi 4718571 (JP)
(74) Representative: Kuhnen & Wacker
(86) International application number: PCT/JP2005/016203
(87) International publication number: WO 2006/028028

(56) References cited:
- EP-A- 0 427 494
- EP-A- 1 332 788
- US-A- 5 989 507
- US-A- 6 087 298
- US-A1- 2004 001 782
- PATENT ABSTRACTS OF JAPAN vol. 011, no. 353 (C-457), 18 November 1987 (1987-11-18) & JP 62 125856 A (TOYOTA MOTOR CORP), 8 June 1987 (1987-06-08)
- PATENT ABSTRACTS OF JAPAN vol. 010, no. 226 (C-364), 7 August 1986 (1986-08-07) & JP 61 061642 A (TOYOTA MOTOR CORP), 29 March 1986 (1986-03-29) -& DATABASE WPI Section Ch, Week 198619 Derwent Publications Ltd., London, GB; Class H06, AN 1986-122376 XP002356114 & JP 61 061642 A (TOYOTA JIDOSHA KK) 29 March 1986 (1986-03-29)
- PATENT ABSTRACTS OF JAPAN vol. 1997, no. 04, 30 April 1997 (1997-04-30) & JP 08 332350 A (TOYOTA MOTOR CORP), 17 December 1996 (1996-12-17)

## Description

### TECHNICAL FIELD

The present invention relates to a catalyst for purifying exhaust gases, such as three-way catalysts for purifying HC, CO and NOₓ in exhaust gases. In particular, it relates to a catalyst for purifying exhaust gases, catalyst which is good in terms of the HC purifying performance in low-temperature regions, such as immediately after starting engines.

### BACKGROUND ART

As exhaust gas-purifying catalysts for purifying automotive exhaust gases, three-way catalysts have been widely used conventionally. The three-way catalysts comprise porous supports, such as alumina, and noble metals, such as Pt, loaded on the porous supports. The three-way catalysts can efficiently purify CO, HC and NOₓ at around the stoichiometric air-fuel ratio.

Among noble metals, Pt and Pd contribute mainly to purifying CO and HC by oxidation. Not only Rh contributes mainly to purifying NOₓ by reduction, but also has an action of inhibiting Pt and Pd from sintering. Therefore, using Rh and Pt or Pd combidely suppresses the drawback that the decrement of Pt or Pd's active sites, which results from sintering Pt or Pd, has degraded the activities of Pt or Pd. Thus, it has been understood that Rh improves the heat resistance of Pt and Pd.

Noblemetals loaded on three-way catalysts are less likely to produce the catalytic reactions at lower temperatures than their activation temperatures. Accordingly, in low-temperature exhaust gases emitted immediately after starting engines, three-way catalysts might not function fully to cause a drawback of increasing HC emission. Moreover, when cold starting engines, the air-fuel ratios are often turned out to be fuel-rich atmospheres. Consequently, the HC content is abundant in exhaust gases, and is believed to be one of the causes of the drawback.

Hence, as Japanese Unexamined Patent Publication (KOKAI) No. 6-205,983 discloses, it has been carried out frequently to increase the noble metal loading amount on the exhaust-gas upstream side of a catalyst. On the exhaust-gas upstream side of a catalyst, the temperature of the catalyst increases quickly so that the temperatures of noble metals reach the activation temperatures of noble metals relatively early, because exhaust gases, which have not been turned into the laminar flows, collide with the cellular walls of the catalyst. Moreover, after the noble metals are heated to their activation temperatures, the noble metals' catalytic reactions further increase the temperature of the exhaust gas to facilitate the temperature increment on the exhaust-gas downstream side of the catalyst. Thus, the catalyst is improved in terms of the purifying performance in low-temperature regions.

However, increasing the loading amount of Pt, for instance, heightens the loading density of Pt. Accordingly, Pt particles are facilitated to sinter to each other. Consequently, there might arise a drawback that the activities of Pt are likely to degrade.

Moreover, it has been known as well to use Pd, which exhibits a high HC oxidizing activity, as a noble metal. For example, Japanese Unexamined Patent Publication (KOKAI) No. 8-24, 644 proposes a catalyst in which Pd is loaded uniformly over the entire length of the catalyst and Pt is loaded on the exhaust-gas upstream side of the catalyst. The catalyst demonstrates high purifying performance due to the following reasons. Since Pt, which is good in terms of the purifying performance under the condition of greatly fluctuating air-fuel ratio, is loaded on the exhaust-gas upstream side of the catalyst, it is possible to optimize the balance between the characteristics of Pd, exhibiting a good three-way activity at around the stoichiometric air-fuel ratio, and the characteristics of Pt exhibiting good NOₓ purifying performance in fuel-lean atmospheres.

In addition, Japanese Unexamined Patent Publication (KOKAI) No. 8-332, 350 proposes a catalyst in which Pd and Rh are loaded on the exhaust-gas upstream side of the catalyst and Pt and Rh are loaded on the exhaust-gas downstream side of the catalyst. The catalyst is good in terms of the HC purifying performance in low-temperature regions as well as the high-temperature durability, because Pd is loaded on the exhaust-gas upstream side of the catalyst in a high concentration. Moreover, the catalyst demonstrates high NOₓ purifying performance, because the reaction heat on the exhaust-gas upstream side heightens the activities of Pt on the exhaust-gas downstream side.

However, the coexistence of Pd and Rh is more associated with the problem of low NOₓ purifying performance than the coexistence of Pt and Rh is. Moreover, Pd is more likely to develop alloying with Rh than Pt is. The alloying might result in the drawback of degrading the characteristics of Rh. In addition, it has been desired to efficiently utilize Rh as well as to enhance the heat resistance of Rh by inhibiting it from deteriorating, because Rh is present as a resource very scarcely.

### DISCLOSURE OF THE INVENTION

The present invention has been developed in view of the aforementioned circumstances. It is therefore an object of the present invention not only to let Pt and Rh exhibit their respective characteristics fully but also to efficiently utilize Rh by maximally inhibiting the deterioration of Pt and Rh.

A catalyst for purifying exhaust gases according to the present invention comprises:
a support substrate demarcating an exhaust-gas flow passage, an exhaust-gas inlet end and an exhaust-gas outlet end, and having an overall length between the exhaust-gas inlet end and the exhaust-gas outlet end; and
a catalytic loading layer formed on a surface of the exhaust-gas flow passage, and composed of a porous oxide support and a noble metal;
wherein the catalytic loading layer comprises a coexistence area occupying the overall length of the support substrate by a factor of 4/10 or less from the exhaust-gas inlet end and composed of rhodium and platinum loaded thereon, and a rhodium area formed toward the exhaust-gas outlet end from the coexistence area and composed of rhodium loaded uniformly thereon in a flow direction of the exhaust gases.

In the present catalyst for purifying exhaust gases, the rhodium area of the catalytic loading area can preferably be formed entirely toward the exhaust-gas outlet end from the coexistence area.

Moreover, the coexistence area of the catalytic loading layer can preferably be composed of rhodium and platinum with a proportion of platinum (Pt) with respect to rhodium (Rh) falling in a range, 10 ≦Pt/Rh ≦ 60, by weight ratio, and further preferably falling in a range, 15 ≦ Pt/Rh ≦ 50, by weight ratio.

In addition, the porous oxide of the catalytic loading layer can preferably include ceria at least.

The present catalyst for purifying exhaust gases is inhibited from exhibiting deteriorated activities. The advantage results from the arrangement that the coexistence area with Pt and Rh loaded thereon is formed on the exhaust-gas upstream side, which is more likely to be heated to high temperatures than the exhaust-gas downstream side is, so that Pt is inhibited from sintering. Moreover, even if Pt and Rh are alloyed to degrade the characteristics of Rh in the coexistence area, it is possible to efficiently utilize Rh, because Rh loaded on the rhodium area demonstrates its characteristics fully, and because the coexistence area occupies the overall length of the support substrate by a factor of 4/10 or less so that less Rh is alloyed.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is a perspective view of a catalyst for purifying exhaust gases according to an example of the present invention.

Fig. 2 is a cross-sectional view of the catalyst according to the example.

Fig. 3 is a graph for illustrating the relationship between L₂/L₁ (coexistence-area length/overall length) ratios and 50%-HC purifying temperatures.

Fig. 4 is a graph for illustrating the relationship between Pt weight/Rh weight ratios and times for reaching 50%-HC purification.

### BEST MODE FOR CARRYING OUT THE INVENTION

Having generally described the present invention, a further understanding can be obtained by reference to the specific preferred embodiments which are provided herein for the purpose of illustration only and not intended to limit the scope of the appended claims.

In the present catalyst for purifying exhaust gases, the coexistence area with Rh loaded thereon together with Pt is formed in the area occupying the overall length of the support substrate by a factor of 4/10 or less from the exhaust-gas inlet end, and the rhodium area with Rh loaded thereon uniformly in a flow direction of the exhaust gases is formed toward the exhaust-gas outlet end of the support substrate from the coexistence area. Low-temperature exhaust gases emitted from engines immediately after starting collide with the exhaust-gas inlet end of the support substrate before they are turned into the laminar flows, and pass through the coexistence area in the first place. Therefore, the heat of exhaust gases increases the temperature of the present catalyst early, and accordingly Pt having a good ignitability attains the activation temperature relatively quickly. After Pt attains the activation temperature, the heat of reactions resulting from Pt further increases the temperature of the present catalyst, and consequently facilitates the temperature increment of the present catalyst on the exhaust-gas downstream side. As a result, the present catalyst demonstrates upgraded performance for purifying HC and NOₓ.

On the other hand, when the coexistence area of the catalytic loading layer is heated to high temperatures, Rh inhibits Pt from sintering. Therefore, the activities of Pt are kept from degrading so that the durability of Pt is enhanced. Moreover, even when Pt and Rh are alloyed to degrade the characteristics of Rh, Rh loaded on the rhodium area exhibits its characteristics fully. In addition, the amount of alloying Rh can be reduced, because the coexistence area occupies the overall length of the support substrate by a factor of 4/10 or less. Thus, it is possible to efficiently utilize expensive Rh.

The present catalyst for purifying exhaust gases can be formed as pellet shapes, honeycomb shapes, or foam shapes. However, the present catalyst is hereinafter described in detail when it is formed as a honeycomb-shaped catalyst. Note that the present catalyst can be arranged likewise as hereinafter described even when it is formed as a pellet-shaped catalyst, or a foam-shaped catalyst.

As a honeycomb-shaped substrate making the support substrate, it is possible to use honeycomb-shaped substrates made of heat resistance ceramic, such as cordierite, and honeycomb-shaped substrates made of metallic foils. The catalytic layer composed of the porous oxide support and noble metal is formed on the inner peripheral surfaces of a plurality of cells formed in the honeycomb-shaped substrate.

As for the porous oxide support, it is possible to use one or more members selected from the group consisting of Al₂O₃, SiO₂ ZrO₂ CeO₂ and TiO₂ or to further use composite oxides composed of a plurality of these oxides. Among the oxides, the porous oxide support can preferably comprise CeO₂ The oxygen absorbing-and-releasing ability of CeO₂ can inhibit the atmospheres of exhaust gases from fluctuating. Moreover, when a CeO₂-ZrO₂ composite oxide is used, Pt can further enhance the oxygen absorbing-and-releasing ability of CeO₂ and hydrogen generated by Rh can further upgrade the NOₓ purifying performance of the present catalyst for purifying exhaust gases.

The porous oxide support of the catalytic loading layer can preferably have a uniform composition over the entire length of the honeycomb-shaped substrate in view of production. In certain cases, however, it is possible to use different porous oxide supports for the coexistence area and the rhodium area, respectively. For example, using Al₂O₃ for the coexistence area and using a CeO₂-ZrO₂ composite oxide for the rhodium area can much more enhance the characteristics of the noble metals in both areas. Therefore, the present catalyst for purifying exhaust gases can demonstrate much better purifying performance.

Both Pt and Rh are loaded in the coexistence area of the catalytic loading layer. The proportion of Pt with respect to Rh can preferably fall in a range, 10 ≦ Pt/Rh ≦ 60, by weight ratio, further preferably falling in a range, 15 ≦ Pt/Rh ≦ 50, by weight ratio. When the proportion of Pt with respect to Rh is less than the lower limit of the range, the ignitability of the noble metals might degrade so that the low-temperature HC purifying performance might deteriorate. When the proportion of Pt with respect to the Rh is more than upper limit of the range, Pt might be likely to sinter at high temperatures. Specifically, the loading amount of Pt in the coexistence area can preferably be from 0.5 to 40 g with respect to 1 L of the honeycomb-shaped substrate. When the loading amount of Pt is less than 0.5 g with respect to 1 L of the honeycomb-shaped substrate, the resulting catalysts might exhibit insufficient performance for purifying HC and NOₓ because they might be poor in terms of the ignitability. When the loading amount of Pt is more than 40 g with respect to 1 L of the honeycomb-shaped substrate, not only the advantages effected by Pt saturate but also the sintering of Pt might be likely to occur at high temperatures. The loading amount of Rh in the coexistence area can be such an amount that loaded Rh can inhibit loaded Pt from sintering. For example, the loading amount of Rh in the coexistence area can preferably be from 0.05 to 3 g with respect to 1 L of the honeycomb-shaped substrate. When the loading amount of Rh is less than 0.05 g with respect to 1 L of the honeycomb-shaped substrate, the sintering of Pt might be likely to occur at high temperatures. When the loading amount of Rh is more than 3 g with respect to 1 L of the honeycomb-shaped substrate, not only the advantages effected by Rh saturate but also the effective utilization of Rh cannot be achieved. Note that the other noble metals or base metals can be loaded on the coexistence area of the catalytic loading layer as far as they do not impair the performance of the coexistence area. However, it is desirable to load Pt and Rh alone in the coexistence area of the catalytic loading layer.

The coexistence area of the catalytic loading layer occupies the overall length of the support substrate by a factor of 4/10 or less from the exhaust-gas inlet end of the support substrate. When the coexistence area is formed to occupy the overall length of the support substrate by a factor of more than 4/10 from the exhaust-gas inlet end, the resulting catalysts exhibit insufficient performance for purifying HC and NOₓ because the proportion of Rh alloying with Pt increases. Note that the coexistence area can be formed immediately from the exhaust-gas inlet end of the support substrate. However, the coexistence area can preferably be formed away from the exhaust-gas inlet end by a distance of 5 mm or more, because it has been found that noble metals loaded within a range of 5 mm from the exhaust-gas inlet end contribute to the catalytic reactions relatively less.

As far as the rhodium area of the catalytic layer is disposed downstream with respect to the coexistence area, the range for forming the rhodium area is not limited in particular. It is preferable, however, to entirely form the rhodium area toward the exhaust-gas outlet end from the coexistence area.

The loading amount of Rh in the rhodium area can preferably be from 0.05 to 5 g with respect to 1 L of the honeycomb-shaped substrate. When the loading amount of Rh is less than 0.05 g with respect to 1 L of the honeycomb-shaped substrate, the resulting catalysts might exhibit insufficient purifying performance. When the loading amount of Rh is more than 5 g with respect to 1 L of the honeycomb-shaped substrate, not only the advantages effected by Rh saturate but also the effective utilization of Rh cannot be achieved. Note that the loading density of Rh in the rhodium area can differ from that in the coexistence area. It is convenient, however, that the loading density of Rh in the rhodium area equals that in the coexistence area in view of production. Moreover, the other noble metals or base metals can be loaded on the rhodium area of the catalytic loading layer as far as they do not impair the performance of the rhodium area. However, it is desirable to load only Rh in the rhodium area of the catalytic loading layer.

### EXAMPLES

Hereinafter, the present invention will be described in detail with reference to examples and comparative examples.

### (Example No. 1)

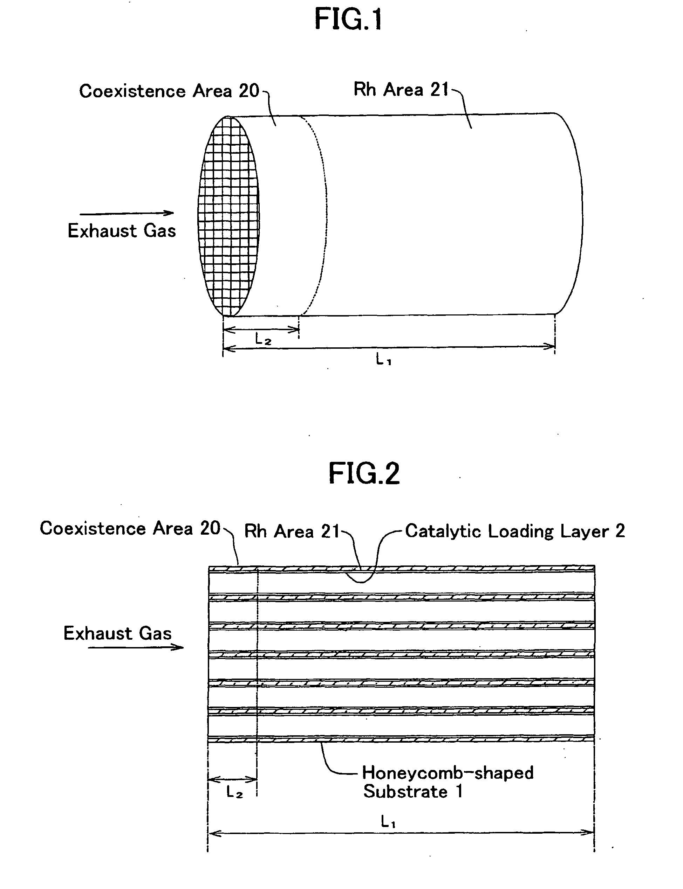

Figs. 1 and 2 illustrate a catalyst for purifying exhaust gases according to Example No. 1 of the present invention. As illustrated in the drawings, the catalyst comprises a cylindrical honeycomb-shaped substrate 1, and a catalytic loading layer 2. The cylindrical honeycomb-shaped 1 comprises a large number of square-shaped cells, and has an overall length L₁ of 130 mm. The catalytic loading layer 2 is formed on the surfaces of the square-shaped cells of the cylindrical honeycomb-shaped substrate 1. Note that a coexistence area 20 is formed over a first range from the exhaust-gas inlet end of the cylindrical honeycomb-shaped substrate 1 toward the exhaust-gas outlet end by a length L₂ of 20 mm; and a rhodium area 21 was formed over a second range from the coexistence area 20 toward the exhaust-gas outlet end by a length of 110 mm.

A production process of the catalyst according to Example No. 1 will be hereinafter described in detail, instead of describing the detailed arrangement.

120 parts by weight of a CeO₂-ZrO₂ solid-solution powder, 80 parts by weight of an activated alumina powder, and an alumina binder were mixed with an adequate amount of water, and were milled therewith, thereby preparing a slurry. Note that the CeO₂-ZrO₂ solid-solution powder comprised CeO₂, ZrO₂ and Y₂O₃ with a proportion of CeO₂: ZrO₂: Y₂O₃ = 65: 30: 15 by molar ratio. Moreover, the alumina binder comprised 3 parts by weight of alumina hydrate, and 44 parts by weight of 40% aluminum nitrate aqueous solution. The resulting slurry was wash-coated onto the honeycomb-shaped substrate 1. Note that the cylindrical honeycomb-shaped substrate 1 was made of cordierite, and had a volume of 1.1 L. Moreover, the honeycomb-shaped substrate 1 comprised the square-shaped cells in a quantity of 600 cells per square inch, and had a cellular wall thickness of 75 µm, an overall length of 130 mm and an outside diameter of 103 mm. Thereafter, the excessive slurry was blown off from the honeycomb-shaped substrate 1 with air. After drying the honeycomb-shaped substrate 1 at 120 °C, the honeycomb-shaped substrate 1 was calcined at 650 °C for 3 hours, thereby forming a coating layer on the entire surfaces of the cells in the honeycomb-shaped substrate 1. Note that the coating layer was formed in an amount of 210 g with respect to 1 L of the honeycomb-shaped substrate 1.

Then, the honeycomb-shaped substrate 1 was dipped into an RhCl₃ aqueous solution with a predetermined concentration to immerse the entire coating layer, or the honeycomb-shaped substrate lover the entire length, into the RhCl₃ aqueous solution, thereby loading Rh on the coating layer by adsorption. After removing the honeycomb-shaped substrate 1 from the RhCl₃ aqueous solution, the honeycomb-shaped substrate 1 was dried at 120 °C, and was further calcined at 500 °C for 1 hour to complete loading Rh on the coating layer. Note that the loading amount of Rh was 0.4 g with respect to 1 L of the honeycomb-shaped substrate 1.

Finally, the coating layer of the honeycomb-shaped substrate 1 was impregnated with a prescribed volume of a Pt(NO₂)₂(NH₃)₂ aqueous solution having a predetermined concentration by a length of 20 mm from the exhaust-gas inlet end toward the exhaust-gas outlet end. After drying the honeycomb-shaped substrate 1 at 120 °C, and the honeycomb-shaped substrate 1 was calcined at 650 °C for 3 hours to complete loading Pt on the coating layer. Thus, the coexistence area 20 and the rhodium area 21 were formed. Note that Pt was loaded in the coexistence area 20 in a loading amount of 10 g with respect to 1 L of the honeycomb-shaped substrate 1, and was loaded in an amount of 1.666 g in total.

### (Example No. 2)

Except that the coexistence area 20 was formed by a length L₂ of 10 mm from the exhaust-gas inlet end and accordingly Pt was loaded in the coexistence area 20 in a loading amount of 20 g with respect to 1 L of the honeycomb-shaped substrate 1, a catalyst for purifying exhaust gases according to Example No. 2 of the present invention was produced in the same manner as Example No. 1. Note that Pt was loaded in an amount of 1.666 g in total.

### (Example No. 3)

Except that the coexistence area 20 was formed by a length L₂ of 50 mm from the exhaust-gas inlet end and accordingly Pt was loaded in the coexistence area 20 in a loading amount of 4 g with respect to 1 L of the honeycomb-shaped substrate 1, a catalyst for purifying exhaust gases according to Example No. 3 of the present invention was produced in the same manner as Example No. 1. Note that Pt was loaded in an amount of 1.666 g in total.

### (Example No. 4)

Except that the coexistence area 20 was formed by a length L₂ of 40 mm from the exhaust-gas inlet end and accordingly Pt was loaded in the coexistence area 20 in a loading amount of 5 gwith respect to 1 L of the honeycomb-shaped substrate 1, a catalyst for purifying exhaust gases according to Example No. 4 of the present invention was produced in the same manner as Example No. 1. Note that Pt was loaded in an amount of 1.666 g in total.

### (Example No. 5)

Except that the coexistence area 20 was formed by a length L₂ of 5 mm from the exhaust-gas inlet end and accordingly Pt was loaded in the coexistence area 20 in a loading amount of 40 g with respect to 1 L of the honeycomb-shaped substrate 1, a catalyst for purifying exhaust gases according to Example No. 5 of the present invention was produced in the same manner as Example No. 1. Note that Pt was loaded in an amount of 1.666 g in total.

### (Example No. 6)

Except that the coexistence area 20 was formed by a length L₂ of 7.5 mm from the exhaust-gas inlet end, a catalyst for purifying exhaust gases according to Example No. 6 of the present invention was produced in the same manner as Example No. 1. However, note that Pt was loaded in the coexistence area 20 in a loading amount of 30 g with respect to 1 L of the honeycomb-shaped substrate 1, because Pt was loaded in an amount of 1.87 g in total.

### (Comparative Example No. 1)

Except that the entire coating layer of the honeycomb-shaped substrate 1 was impregnated with a prescribed volume of a Pt (NO₂)₂(NH₃)₂ aqueous solution having a predetermined concentration, that is, the honeycomb-shaped substrate 1 was impregnated therewith over the entire length, a catalyst for purifying exhaust gases according to Comparative Example No. 1 was produced in the same manner as Example No. 1. Note that, in the catalyst according to Comparative Example No. 1, no coexistence area 20 and rhodium area 21 were formed so that Pt and Rh were loaded uniformly over the entire length of the honeycomb-shaped substrate 1.

### (Comparative Example No. 2)

Except that no Rh was loaded, and that the entire coating layer of the honeycomb-shaped substrate 1 was impregnated with a prescribed volume of a Pt (NO₂)₂(NH₃)₂ aqueous solution having a predetermined concentration, that is, the honeycomb-shaped substrate 1 was impregnated therewith over the entire length, a catalyst for purifying exhaust gases according to Comparative Example No. 2 was produced in the same manner as Example No. 1. Note that, in the catalyst according to Comparative Example No. 2, no coexistence area 20 and rhodium area 21 were formed so that only Pt was loaded uniformly over the entire length of the honeycomb-shaped substrate 1.

### (Comparative Example No. 3)

Except that no Pt was loaded, a catalyst for purifying exhaust gases according to Comparative Example No. 3 was produced in the same manner as Example No. 1. Note that, in the catalyst according to Comparative Example No. 3, no coexistence area 20 and rhodium area 21 were formed so that only Rh was loaded uniformly over the entire length of the honeycomb-shaped substrate 1.

### (Comparative Example No. 4)

Except that the coexistence area 20 was formed by a length L₂ of 65 mm from the exhaust-gas inlet end and accordingly Pt was loaded in the coexistence area 20 in a loading amount of 3.08 gwith respect to 1 L of the honeycomb-shaped substrate 1, a catalyst for purifying exhaust gases according to Comparative Example No. 4 was produced in the same manner as Example No. 1. Note that Pt was loaded in an amount of 1.666 g in total.

### (Comparative Example No. 5)

Except that the coexistence area 20 was formed by a length L₂ of 80 mm from the exhaust-gas inlet end and accordingly Pt was loaded in the coexistence area 20 in a loading amount of 2.5 g with respect to 1 L of the honeycomb-shaped substrate 1, a catalyst for purifying exhaust gases according to Comparative Example No. 5 was produced in the same manner as Example No. 1. Note that Pt was loaded in an amount of 1.666 g in total.

### (Comparative Example No. 6)

Except that a palladium nitrate aqueous solution was used instead of the Pt(NO₂)₂(NH₃)₂ aqueous solution, a catalyst for purifying exhaust gases according to Comparative Example No. 6 was produced in the same manner as Example No. 1. Note that, in the catalyst according to Comparative Example No. 6, Pd and Rh were loaded in the coexistence area 20. Also note that the loading amount of Pd was equal to the loading amount of Pt in Example No. 1.

### (Comparative Example No. 7)

Except that a palladium nitrate aqueous solution was used instead of the Pt(NO2)₂(NH₃)₂ aqueous solution, a catalyst for purifying exhaust gases according to Comparative Example No. 7 was produced in the same manner as Example No. 4. Note that, in the catalyst according to Comparative Example No. 7, Pd and Rh were loaded in the coexistence area 20. Also note that the loading amount of Pd was equal to the loading amount of Pt in Example No. 4.

### <Testing and Evaluation>

The catalysts according to Example Nos. 1 through 6 and Comparative Example Nos. 1 through 7 were installed to an engine bench, which was equipped with a V-eight-cylinder 4.0 L-displacement engine, respectively. Then, the catalysts were subjected to a durability test in which exhaust gases were flowed through the catalysts at a catalytic bed temperature of 1, 000 °C for 100 hours. Note that the exhaust gases were emitted from the engine which was run with air-fuel mixtures whose air-fuel ratios A/F fluctuated between 15 and 14 with a frequency of 1 Hz. Thereafter, catalysts undergone the durability test were installed to another engine, which was equipped with an in-line four-cylinder 2.4 L-displacement engine bench, respectively. While running the engine at the stoichiometric air-fuel ratio, the catalysts were heated from 200 °C to 450 °C at a temperature increment rate of 10 °C/minute using a heat exchanger. Meanwhile, the HC conversions exhibited by the catalyst were measured continuously. Thus, a temperature at which HC components were purified by 50% (hereinafter simply referred to as a "50%-HC purifying temperature") was calculated for each of the catalysts. Moreover, for the catalysts according to Example Nos. 1 and 4 and Comparative Example Nos. 6 and 7, which had undergone the durability test, their CO conversions and NOₓ conversions were measured continuously. The resulting CO conversions and NOₓ conversions were plotted to draw CO conversion curves and NOₓ conversion curves, and conversions at intersection points, or crossover points, at which the resultant CO conversion curves and NOₓ conversion curves cross each other, were found. Table 2 below sets forth the results as "COP conversions."

Moreover, the exhaust system of the engine bench was switched to a bypass line in order to introduce an exhaust gas, whose temperature was controlled at 450 °C at the inlet of catalyst, into each of the catalysts, which had been subjected to the durability test and were then held at room temperature. Thereafter, times for attaining to purify HC components by 50% (hereinafter simply referred to as "times for reaching 50%-HC purification) were measured for each of the catalysts.

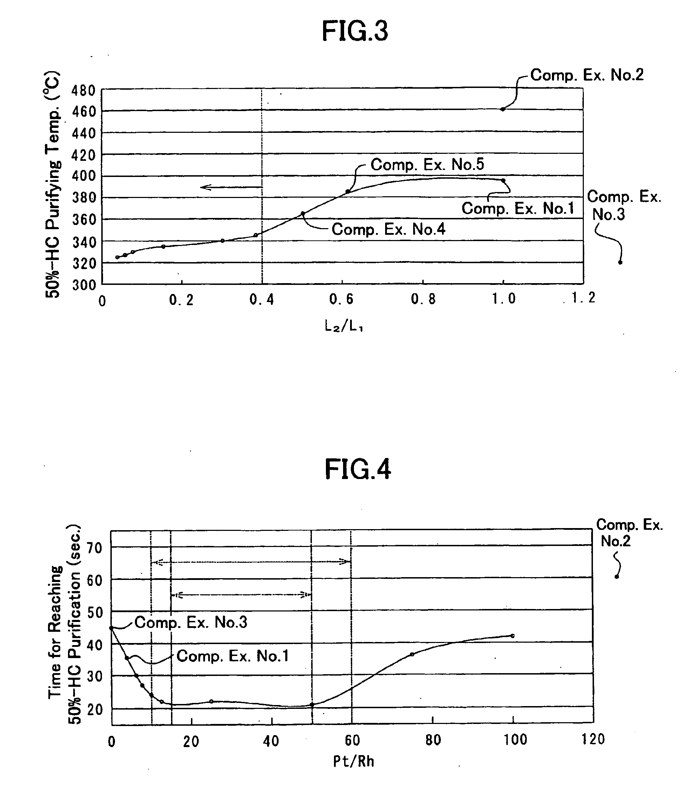

Table 1 and Table 2 below represent the arrangements of the respective catalysts and the test results on them. Moreover, Fig. 3 illustrates the relationships between the L₂/L₁ ratios and the 50%-HC purification temperatures, and Fig. 4 illustrates the relationships between the Pt weight/Rh weight ratios in the coexistence area 20 and the times for reaching 50%-HC purification.

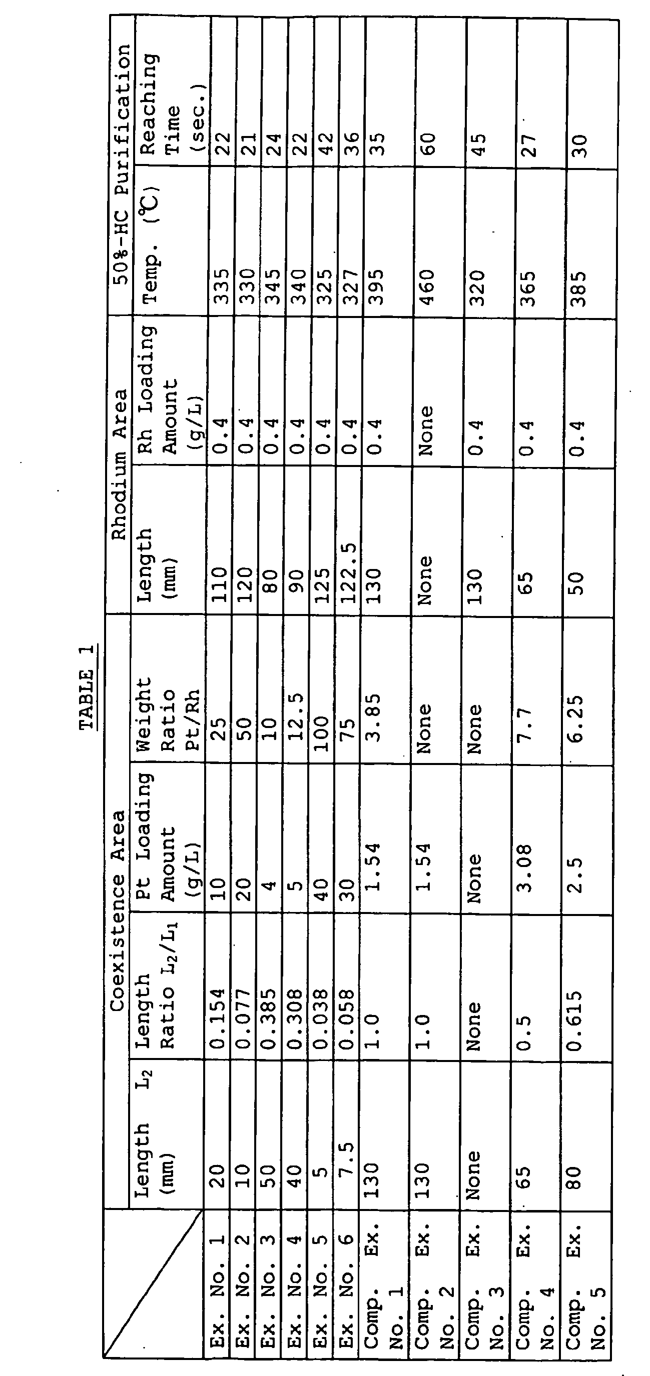

From Fig. 3, it is seen that the catalysts according to Example Nos. 1 through 6 were better in terms of the purifying performance in low-temperature regions, compared with the catalysts according to Example Nos. 1 through 5, because the catalysts according to Example Nos. 1 through 6 exhibited the 50%-HC purifying temperatures of 350 °C or less. It is apparent that controlling the L₂/L₁ ratio to 0.4 or less resulted in the advantage.

Moreover, the following are appreciated from Fig. 4. When the Pt weight/Rh weight ratio in the coexistence area 20 fell in a range, 10 ≦Pt/Rh ≦ 60, by weight ratio, the times for reaching 50%-HC purification were 25 seconds or less. Moreover, when the Pt weight/Rh weight ratio in the coexistence area 20 fell in a range, 15 ≦ Pt/Rh ≦ 50, by weight ratio, the times for reaching 50%-HC purification were further shortened. Thus, it is understood that the catalysts according to Example Nos. 1 through 4 were particularly good in terms of the ignitability at low temperatures.

However, the catalyst according to Comparative Example No. 3 exhibited a low 50%-HC purifying temperature, but showed a prolonged time for reaching 50%-HC purification. Thus, the catalyst according to Comparative Example No. 3 was poor in terms of the ignitability at low temperatures. The disadvantage results from the fact that no Pt with good ignitability was loaded thereon. Moreover, the catalyst according to Comparative Example No. 2 was poor in both 50%-HC purifying temperature and time for reaching 50%-HC purification. This fact implies that the sintering of Pt degraded the catalyst's activities considerably because no Rh was loaded thereon. On the other hand, the catalyst according to Comparative Example No. 1 exhibited higher activities at low temperatures, compared with the catalysts according to Comparative Example Nos. 2 and 3, because both Pt and Rh were loaded thereon. However, the low-temperature activities were far inferior to those of the catalysts according to Example Nos. 1 through 6. This disadvantage is believed to result from the fact that the characteristics of the catalyst according to Comparative Example No. 1 degraded because Rh was alloyed with Pt over the entire length of the catalyst.

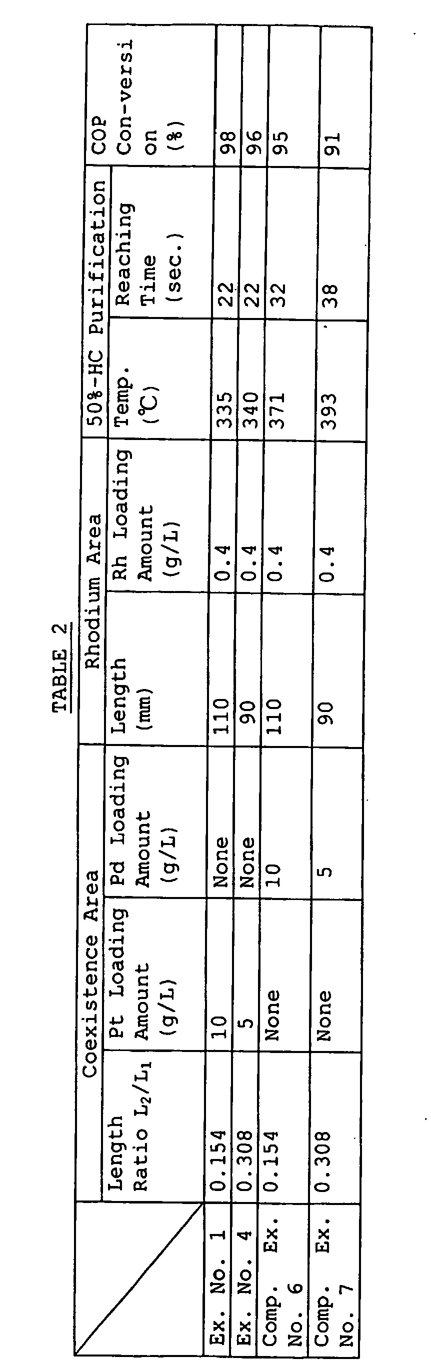

Moreover, it is apparent from Table 2 that the catalysts according to Example Nos. 1 and 4, which comprised Pt loaded in the coexistence area 20, exhibited higher COP conversions than the catalysts according to Comparative Example Nos. 6 and 7, which comprised Pd loaded in the coexistence area 20, did. Note that the CO conversion curves, which the catalysts according to Example Nos. 1 and 4 exhibited, was substantially identical with the CO conversion curves, which the catalysts according to Comparative Example Nos. 6 and 7 exhibited. Therefore, the catalysts according to Example Nos. 1 and 4 with Pt loaded exhibited higher NOₓ purifying characteristics than the catalysts according to Comparative Example Nos. 6 and 7 with Pd loaded did. In addition, the characteristic difference between the catalyst according to Example No. 4 and the catalyst according to Comparative Example No. 7 was more noticeable than that between the catalyst according to Example No. 1 and the catalyst according to Comparative Example No. 6. For example, the larger L₂/L₁ ratio was, the greater the NOₓ-purifying characteristic difference was. The phenomenon is believed to result from the fact that Pd is more likely to be alloyed with Rh than Pt is so that the alloying has degraded the characteristics of Rh.

Specifically, the coexistence area 20 with Rh and Pt loaded thereon demonstrates the advantages maximally. On the contrary, it is evident that the coexistence area 20 with Rh and Pd thereon is not preferable.

### INDUSTRIAL APPLICABILITY

The catalyst for purifying exhaust gases according to the present invention can be utilized as three-way catalysts but also as oxidizing catalysts, selective NOₓ reducing catalysts, NOₓ sorbing-and-reducing catalysts or plugged filter catalysts.

## Claims

1. A catalyst for purifying exhaust gases, comprising:
a support substrate (1) demarcating an exhaust-gas flow passage, an exhaust-gas inlet end and an exhaust-gas outlet end, and having an overall length between the exhaust-gas inlet end and the exhaust-gas outlet end; and
a catalytic loading layer (2) formed on a surface of the exhaust-gas flow passage, and composed of a porous oxide support and a noble metal;
wherein the catalytic loading layer (2) comprises a coexistence area (20) occupying the overall length of the support substrate (1) by a factor of 4/10 or less from the exhaust-gas inlet end and composed of rhodium (Rh) and platinum (Pt) loaded thereon, and a rhodium area formed toward the exhaust-gas outlet end from the coexistence area (20) and composed of rhodium (Rh) loaded uniformly thereon in a flow direction of the exhaust gases; and
wherein the coexistence area (20) of the catalytic layer is composed of rhodium (Rh) and platinum (Pt) with a proportion of platinum (Pt) with respect to rhodium (Rh) falling in a range, 10 ≦ Pt/Rh ≦ 60, by weight ratio.

2. The catalyst set forth in claim 1, wherein the rhodium area of the catalytic loading layer (2) is formed entirely toward the exhaust-gas outlet end from the coexistence area (20).

3. The catalyst set forth in claim 1, wherein the coexistence area (20) of the catalytic layer is composed of rhodium (Rh) and platinum (Pt) with a proportion of platinum (Pt) with respect to rhodium (Rh) falling in a range, 15 ≦ Pt/Rh ≦ 50, by weight ratio.

4. The catalyst set forth in claim 1, wherein the porous oxide of the catalytic loading layer (2) includes ceria at least.

## Patentansprüche

1. Katalysator zum Reinigen von Abgasen, der aufweist:
ein Trägersubstrat (1), das einen Abgasströmungsweg, ein Abgaseinlassende und ein Abgasauslassende definiert und das eine Gesamtlänge zwischen dem Abgaseinlassende und dem Abgasauslassende aufweist; und
eine Katalysatorbeladungsschicht (2), die auf einer Oberfläche des Abgasströmungswegs ausgebildet ist und die aus einem porösen Oxidträger und einem Edelmetall besteht;
wobei die Katalysatorbeladungsschicht (2) in Strömungsrichtung des Abgases aufweist: einen Gemeinschaftsbereich (20), der ab dem Abgaseinlassende 4/10 oder weniger der Gesamtlänge des Trägersubstrats (1) einnimmt und der aus darauf aufgebrachtem Rhodium (Rh) und Platin (Pt) besteht, und einen Rhodiumbereich, der ab dem Gemeinschaftsbereich (20) zum Abgasauslassende hin ausgebildet ist und der aus gleichmäßig darauf aufgebrachtem Rhodium (Rh) besteht; und
wobei der Gemeinschaftsbereich (20) der Katalysatorschicht aus Rhodium (Rh) und Platin (Pt) besteht, wobei das Gewichtsverhältnis von Platin (Pt) zu Rhodium (Rh) in einem Berech von 10 < Pt/Rh < 60 liegt.

2. Katalysator nach Anspruch 1, wobei der Rhodiumbereich der Katalysatorbeladungsschicht (2) ab dem Gemeinschaftsbereich (20) bis ganz zum Abgasauslassende ausgebildet ist.

3. Katalysator nach Anspruch 1, wobei der Gemeinschaftsbereich (20) der Katalysatorschicht aus Rhodium (Rh) und Platin (Pt) besteht, wobei das Gewichtsverhältnis von Platin (Pt) zu Rhodium (Rh) in einem Bereich von 15 ≤ Pt/Rh ≤ 50 liegt.

4. Katalysator nach Anspruch 1, wobei das poröse Oxid der Katalysatorbeladungsschicht (2) zumindest Cer beinhaltet.

## Revendications

1. Catalyseur de purification de gaz d'échappement, comprenant :
un substrat support (1) démarquant un passage de flux de gaz d'échappement, une extrémité d'entrée de gaz d'échappement et une extrémité de sortie de gaz d'échappement, et ayant une longueur hors-tout entre l'extrémité d'entrée de gaz d'échappement et l'extrémité de sortie de gaz d'échappement ; et
une couche de charge catalytique (2) formée sur une surface du passage de flux de gaz d'échappement, et composée d'un support d'oxyde poreux et d'un métal noble ;
dans lequel la couche de charge catalytique (2) comprend une zone de coexistence (20) occupant la longueur hors-tout du substrat support (1) selon un facteur de 4/10 ou moins à partir de l'extrémité d'entrée de gaz d'échappement et composée de rhodium (Rh) et de platine (Pt) chargés sur celle-ci, et une zone de rhodium formée vers l'extrémité de sortie de gaz d'échappement à partir de la zone de coexistence (20) et composée de rhodium (Rh) chargé uniformément sur celle-ci dans une direction de flux des gaz d'échappement ; et
dans lequel la zone de coexistence (20) de la couche catalytique est composée de rhodium (Rh) et de platine (Pt) avec une proportion de platine (Pt) par rapport au rhodium (Rh) tombant dans une plage de 10 ≤ Pt/Rh ≤ 60, en rapport en poids.

2. Catalyseur selon la revendication 1, dans lequel la zone de rhodium de la couche de charge catalytique (2) est formée en totalité vers l'extrémité de sortie de gaz d'échappement à partir de la zone de coexistence (20).

3. Catalyseur selon la revendication 1, dans lequel la zone de coexistence (20) de la couche catalytique est composée de rhodium (Rh) et de platine (Pt) avec une proportion de platine (Pt) par rapport au rhodium (Rh) tombant dans une plage de 15 ≤ Pt/Rh ≤ 50, en rapport en poids.

4. Catalyseur selon la revendication 1, dans lequel l'oxyde poreux de la couche de charge catalytique (2) inclut de l'oxyde de cérium au moins.
